# EUROPÄISCHE PATENTSCHRIFT

(11) **EP 3 321 858 B1**
(45) Veröffentlichungstag und Bekanntmachung des Hinweises auf die Patenterteilung: **14.07.2021**
(21) Anmeldenummer: 17201019.1
(22) Anmeldetag: 10.11.2017
(51) Int. Cl.: G06K 9/32, G06K 9/50

(54) **AUTOMATISCHE IDENTIFIZIERUNG MEDIZINISCH RELEVANTER VIDEOELEMENTE**
AUTOMATIC IDENTIFICATION OF MEDICALLY RELEVANT VIDEO ELEMENTS
IDENTIFICATION AUTOMATIQUE D'ÉLÉMENTS VIDÉO PERTINENTS D'UN POINT DE VUE MÉDICAL

(30) Priorität: 11.11.2016 DE 102016121668
(43) Veröffentlichungstag der Anmeldung: 16.05.2018
(73) Patentinhaber: Karl Storz SE & Co. KG, 78532 Tuttlingen (DE)
(72) Erfinder: Hiltl, Christoph, 78532 Tuttlingen (DE); Stiller, Heinz-Werner, 78523 Tuttlingen (DE); Nader, Hassanzadeh, 78532 Tuttlingen (DE); Muth, Mélissa, 78532 Tuttlingen (DE); Stock, Frank, 78532 Tuttlingen (DE); Mündermann, Lars, 78532 Tuttlingen (DE); Münzer, Bernd, 78532 Tuttlingen (DE)
(74) Vertreter: Witte, Weller & Partner Patentanwälte mbB

(56) Entgegenhaltungen:
- WO-A2-2013/114361
- US-A1- 2016 125 644
- US-A1- 2016 239 967

## Beschreibung

Die Erfindung betrifft eine Vorrichtung und ein Verfahren zur automatischen Identifizierung medizinisch relevanter Videoelemente.

Im medizinischen Umfeld, insbesondere bei einer Operation, können sehr große Mengen an Videodaten entstehen, die beispielsweise als Dokumentation, für eine Qualitätssicherung, zu Lernzwecken oder wissenschaftlichen Betrachtungen genutzt werden.

Es gibt heute sehr hochwertige Kameras, die hochauflösende Bilder erzeugen können, beispielsweise bei einer Auflösung von 1920x1080 Pixeln (Bildpunkten) oder 3840x2160. Ferner gibt es heute auch sehr fortgeschrittene Möglichkeiten der Speicherung großer Datenmengen.

Die stets steigende Zahl von gespeicherten Videos führt zwar zu einer sehr zuverlässigen Dokumentation aller Vorgänge, macht es aber gleichzeitig für den Menschen immer schwieriger, die gespeicherten Videos im Hinblick auf relevante Videoelemente zu sichten. Selbst bei einer erhöhten Abspielgeschwindigkeit können immer noch viele Stunden erforderlich sein, um relevante Videoelemente zu identifizieren.

WO 2013/114361 A2 offenbart ein System aufweisend eine Speichereinheit zum Speichern von Bildrahmen aus dem Bildstrom, einen Prozessor zum Auswählen eines Streifens von Pixeln aus einer Vielzahl von Bildrahmen des Bildstroms und zum Ausrichten der ausgewählten Streifen nebeneinander, um einen Balken für Motilitätsereignisse zu bilden, und eine visuelle Anzeigeeinheit zum Anzeigen des Balkens für Motilitätsereignisse für einen Benutzer.

US 2016/0125644 A1 offenbart ein Verfahren zur Integration einer sensorischen Eigenschaft, wie z. B. Okklusion, Schatten, Reflexion usw., zwischen physischen und fiktiven (z. B. virtuellen/augmentierten) visuellen oder anderen sensorischen Inhalten, wodurch in beiden Inhalten ein ähnliches Erscheinungsbild von Okklusion, Schatten usw. entsteht. Es wird eine Referenzposition, ein physisches Datenmodell, das physische Objekte repräsentiert, und ein fiktives Datenmodell erstellt oder darauf zugegriffen. Eine erste Sensoreigenschaft aus einem der beiden Datenmodelle wird ausgewählt. Es wird eine zweite Sensoreigenschaft bestimmt, die der ersten Sensoreigenschaft entspricht, und es wird ein fiktiver sensorischer Inhalt aus dem fiktiven Datenmodell erzeugt, auf den diese zweite Sensoreigenschaft angewendet wird. Der fiktive sensorische Inhalt wird an der Referenzposition mit einer durchsichtigen Anzeige ausgegeben. Folglich können fiktive Objekte durch physische Objekte verdeckt erscheinen, physische Objekte können Schatten von fiktiven Lichtquellen werfen usw.

US 2016/0239967 A1 offenbart verschiedene Aspekte eines Systems und Verfahrens zur Raucherkennung während eines anatomischen Eingriffs werden hier offenbart. Gemäß einer Ausführungsform der Offenbarung ist das Verfahren in einer chirurgischen Szenenanalyse-Engine implementierbar, die kommunikativ mit einer Bilderfassungsvorrichtung gekoppelt ist, die ein oder mehrere Videobilder erfasst. Das Verfahren umfasst die Schätzung eines teilweise sichtbaren Bereichs in einem aktuellen Videobild, basierend auf einer zeitlichen Differenz zwischen dem aktuellen Videobild und einem vorherigen Videobild aus dem einen oder den mehreren Videobildern. Danach werden ein oder mehrere Kandidatenpixel in dem geschätzten teilweise sichtbaren Bereich in dem aktuellen Videobild erkannt. Weiterhin wird ein Rauchbereich in dem teilweise sichtbaren Bereich bestimmt, basierend auf dem Beschneiden von einem oder mehreren Kandidatenpixeln

Es ist eine Aufgabe der vorliegenden Erfindung, eine Vorrichtung aufzuzeigen, die eine automatische Identifizierung von medizinisch relevanten Videoelementen in einem Video ermöglicht.

Die Aufgabe wird gelöst durch eine Vorrichtung zur automatischen Identifizierung medizinisch relevanter Videoelemente nach Anspruch 1.

Bei der Lösung der gestellten Aufgabe haben die Erfinder zunächst erkannt, dass man mittels leistungsfähiger Bildanalysen, z.B. der Suche nach Flächen mit im Wesentlichen gleicher Farbe oder nach bestimmten Formen, gute Ergebnisse bei der automatischen Identifizierung medizinisch relevanter Videoelemente erzielt.

Die Erfinder haben dabei jedoch gleichzeitig festgestellt, dass die herkömmlichen Verfahren der Bildanalyse sehr rechenintensiv sind, was im Zusammenspiel mit der sehr großen Menge an Videodaten hohe Anforderungen an die benötigte Rechenleistung stellt. Ferner haben die Erfinder festgestellt, dass eine Analyse eines Videos vorab eingeplant werden muss und nicht ad hoc möglich ist.

Ein Aspekt der Erfindung liegt nun darin, dass die automatische Analyse in mindestens einem Streifenbild oder in einem Streifenbilddatenstrom durchgeführt wird, das/der aus einem Videobild bzw. aus einem Videobilddatenstrom (Video) gewonnen wird. Die Erfinder haben nämlich erkannt, dass die Identifizierung medizinisch relevanter Videoelemente, insbesondere bei einem Video, welches während einer endoskopischen Operation durch eine im Körper des Patienten befindliche Kamera aufgenommen wurde, auch auf Basis eines sehr kleinen Ausschnitts durchgeführt werden kann.

Im Rahmen dieser Offenbarung werden unter anderem die Wörter Videobild, Maskenstreifen und Streifenbild verwendet. Unter einem Videobild soll dabei insbesondere ein Bild aus einem Video verstanden werden, welches von einer Videokamera erzeugt wird. Bei der Videokamera handelt es sich bevorzugt um eine endoskopische Videokamera. Die Videokamera liefert bevorzugt mindestens 15 Bilder pro Sekunde, besonders bevorzugt mindestens 30 Bilder pro Sekunde und insbesondere mindestens 60 Bilder pro Sekunde. Eine Auflösung der Videokamera beträgt bevorzugt mindestens 1920x1080 Punkte und insbesondere mindestens 3640x2160 Punkte. Die Auflösung des Videobilds kann bei bestimmten Ausführungsformen mit der Auflösung der Videokamera übereinstimmen. Bei anderen bevorzugten Ausführungsformen ist die Auflösung des Videobilds gegenüber der Auflösung der Videokamera verändert, insbesondere reduziert.

Der Maskenstreifen definiert einen Ausschnitt aus dem Videobild an einer Stelle, an der man eine gute automatische Identifizierung der medizinisch relevanten Videoelemente erwartet. Ein solcher Maskenstreifen oder mehrere Maskenstreifen kann/können durch Überlegungen oder durch Versuche ermittelt werden, insbesondere durch eine Analyse von bereits verfügbarem Videomaterial. Der Maskenstreifen hat bevorzugt eine zumindest im Wesentlichen rechteckige oder geradlinige Form.

Die Pixel des Videobilds, die von dem Maskenstreifen abgedeckt werden, gehen in das Streifenbild ein. Bei einigen Ausgestaltungen werden Pixel des Videobilds, die von Maskenstreifen nur teilweise abgedeckt werden, in das Streifenbild aufgenommen, bei anderen Ausgestaltungen nicht. Bei bevorzugten Ausgestaltungen wird die Überdeckung nicht anhand einzelner Pixel geprüft, sondern anhand von Pixelblöcken. Die Pixelblöcke haben dabei insbesondere eine Größe ausgewählt aus der Gruppe bestehend aus 2x2 Pixeln, 4x4 Pixeln, 8x8 Pixeln und 16x16 Pixeln. Bei bestimmten Ausführungsformen wird ein Mindestprozentsatz der Überlappung vorgegeben, damit ein Pixel bzw. ein Pixelblock in das Streifenbild aufgenommen wird. Die Pixelblöcke sind bei bevorzugten Ausgestaltungen disjunkt zueinander, das heißt, sie überlappen sich nicht.

Bei bevorzugten Ausgestaltungen weist der Maskenstreifen eines oder mehrere der folgenden Merkmale auf:
- Eine Breitenposition einer Mitte des Maskenstreifens von einer Bildmitte des Videobilds ist um höchstens 30%, bevorzugt höchstens 15%, besonders bevorzugt höchstens 5% und insbesondere höchstens 2% einer Breite der Videobilder in einer Breitenrichtung entfernt.
- Eine Höhenposition einer Mitte des Maskenstreifens von einer Bildmitte des Videobilds ist um höchstens 30%, bevorzugt höchstens 15%, besonders bevorzugt höchstens 5% und insbesondere höchstens 2% einer Höhe der Videobilder in einer Höhenrichtung entfernt.
- Eine Streifenhöhe des Maskenstreifens beträgt mindestens 25%, bevorzugt mindestens 40%, besonders bevorzugt mindestens 65% und insbesondere mindestens 75% einer Höhe der Videobilder.
- Eine Streifenhöhe des Maskenstreifens beträgt höchstens 99%, bevorzugt höchstens 95%, besonders bevorzugt höchstens 90% und insbesondere höchstens 80% einer Höhe der Videobilder.
- Eine Streifenbreite des Maskenstreifens beträgt bevorzugt höchstens 8 Pixel, besonders bevorzugt höchstens 4 Pixel und insbesondere höchstens 2 Pixel.
- Ein Streifenwinkel des Maskenstreifens, der zwischen einer Richtung einer Streifenhöhe des Maskenstreifens und einer Kante der Videobilder gebildet ist, beträgt höchstens 30°, bevorzugt höchstens 15°, besonders bevorzugt höchstens 5° und insbesondere höchstens 1°.
- Ein Streifenwinkel des Maskenstreifens, der zwischen einer Richtung einer Streifenhöhe des Maskenstreifens und einer Kante der Videobilder gebildet ist, korrespondiert mit einem Winkel von arctan(1/n) mit n ≥ 1. Solche Winkel sind besonders vorteilhaft, wenn mit Pixelblöcken gearbeitet wird.
- Der Maskenstreifen wird in Abhängigkeit von der Art der Operation und/oder der aktuellen Phase der Operation gewählt.

Bei einigen Ausgestaltungen wird das Streifenbild erzeugt, indem der Maskenstreifen auf das Videobild in seiner ursprünglichen Auflösung gelegt wird. Bei anderen Ausgestaltungen wird der Maskenstreifen auf eine reduzierte oder komprimierte Version des Videobilds gelegt. Bei einigen Ausgestaltungen wird die Größe des Streifenbilds nach der Maskierung verändert, insbesondere reduziert.

Da die Analysevorrichtung nun nur noch ein Streifenbild oder mehrere Streifenbilder oder den Streifenbilddatenstrom analysieren muss, kann die automatische Identifizierung der medizinisch relevanten Videoelemente schneller erfolgen, insbesondere ad hoc durchgeführt werden.

Bei den relevanten Videoelementen handelt es sich insbesondere um relevante Videobilder (points of interest, POI) oder um relevante Videosegmente (segments of interest, SOI).

Wenn die Analysevorrichtung das Vorhandensein eines gesuchten Merkmals ermittelt hat, gibt sich ein entsprechendes Ergebnis aus. Die Verarbeitungseinrichtung gibt dann eine Startmarke aus, die eine Zuordnung zwischen dem Vorhandensein des gesuchten Merkmals und einer Position in dem Streifenbilddatenstrom angibt, die einem Streifenbild entspricht. Da jedes Streifenbild aus einem zugeordneten Videobild gewonnen wurde, ist mittels der Startmarke auch die Position in dem Video zu ermitteln. Die Verarbeitungsvorrichtung gibt also eine Information aus, die ein Bild in dem Video angibt, das als ein medizinisch relevantes Videoelement identifiziert wurde.

Wurde ein relevantes Videobild gesucht, so erhält man mittels der Startmarke ein relevantes Videobild. Wird ein relevantes Videosegment gesucht, so erhält man mittels der Startmarke den Beginn eines Abschnitts in dem Video.

Anhand der Startmarke kann das Video entweder automatisch oder durch den Benutzer an die gewünschte Position gefahren werden. Das medizinisch relevante Videoelement kann dann unmittelbar betrachtet werden.

Bei einer vorteilhaften Ausgestaltung ist die Verarbeitungseinrichtung ferner dafür ausgebildet, eine Endmarke auszugeben, die eine Zuordnung zwischen einem fehlenden Vorhandensein und einer Position in dem Streifenbilddatenstrom angibt, wenn das Ergebnis das fehlende Vorhandensein des gesuchten Merkmals angibt, nachdem zuvor eine Startmarke ausgegeben wurde.

Auf diese Weise kann vorteilhaft ein relevantes Videosegment ermittelt werden. Wurde das Vorhandensein eines gesuchten Merkmals ermittelt, so wird bei dieser Ausgestaltung nun beobachtet, zu welchem Zeitpunkt das gesuchte Merkmal nicht mehr vorhanden ist. Wenn das Merkmal nach seinem vorherigen Auftreten nun wieder fehlt, wird diese Stelle durch eine Endmarke beschrieben. Der Bereich zwischen Startmarke und Endmarke gibt dann den Bereich an, über den das gesuchte Merkmal vorhanden war. Das Segment kann dann entweder automatisch oder durch einen Benutzer ab der Startmarke abgespielt werden und an der Endmarke gestoppt werden.

Bei bevorzugten Ausgestaltungen hat das Streifenbild eine Breite von 1 Pixel, wenn es in den Streifenbilddatenstrom überführt wird.

Dadurch ist die Aufgabe vollständig gelöst.

Bei einer bevorzugten Ausgestaltung ermittelt die Analyse eine Farbsättigung in mindestens einem Streifenbild aus dem Streifenbilddatenstrom und gibt bei Unterschreiten eines Schwellwerts der Farbsättigung das Vorhandensein des gesuchten Merkmals an, wobei das gesuchte Merkmal eine Rauchentwicklung ist.

Bei endoskopischen Operationen werden elektrische Instrumente eingesetzt, mit denen durch thermische Verfahren Körperteile verödet oder durchtrennt werden. Dabei entsteht Rauch, der sich im Video in einer verringerten Sättigung der Pixelwerte auswirkt. Im Streifenbild sind die Bereiche, in denen es zu einer Rauchentwicklung kommt, aufgrund einer verringerten Farbsättigung zu erkennen. Wird in einem Streifenbild ein Unterschreiten des Schwellwerts der Farbsättigung festgestellt, so erlaubt dies den Rückschluss auf eine Rauchentwicklung in dem korrespondierenden Videobild. Bei bevorzugten Ausführungsformen wird der Durchschnitt der Farbsättigung aller Pixel des Streifenbilds ermittelt. Bei anderen bevorzugten Ausgestaltungen wird entweder der Maximalwert der Farbsättigungen aller Pixel im Streifenbild oder der Minimalwert der Farbsättigungen aller Pixel im Streifenbild ermittelt. Die so ermittelten Werte werden dann mit dem genannten Schwellwert verglichen.

Bei einer vorteilhaften Ausgestaltung ermittelt die Analyse eine Farbsättigung in mindestens zwei Streifenbildern aus dem Streifenbilddatenstrom und gibt bei Abfall der Farbsättigung im Verlaufe der Zeit das Vorhandensein des gesuchten Merkmals an, wobei das gesuchte Merkmal eine Rauchentwicklung ist.

Diese Ausgestaltung ermöglicht eine erweiterte Erkennung einer Rauchentwicklung. Da die Farbsättigung bei Betrachtung verschiedener Organe im menschlichen Körper unterschiedlich sein kann, stellt diese Ausgestaltung auf die Änderung der Farbsättigung ab. Wird ein Abfall der Farbsättigung im Verlaufe der Zeit festgestellt, so wird daraus auf das Vorhandensein einer Rauchentwicklung geschlossen. Bevorzugt werden dabei Mindestwerte für den Abfall festgelegt, bei dessen Überschreiten eine Rauchentwicklung angenommen wird. Ein markanter Verlust an Farbsättigung markiert den Beginn einer potentiellen Szene mit Rauchentwicklung. Ein Anstieg der Sättigungswerte kann das Ende einer Szene mit Rauchentwicklung markieren, so dass in entsprechender Weise auch das Ende einer Rauchentwicklung identifiziert werden kann.

Bei einer vorteilhaften Ausgestaltung wird die Farbsättigung als eine durchschnittliche Farbsättigung über mindestens zwei Streifenbilder, bevorzugt mindestens drei Streifenbilder, besonders bevorzugt mindestens fünf Streifenbilder und insbesondere mindestens zehn oder mindestens dreißig Streifenbilder ermittelt, wobei es sich bei den Streifenbildern insbesondere um im Streifenbilddatenstrom aufeinanderfolgende Streifenbilder handelt. Bei einer bevorzugten Ausführungsform wird ein Fenster über die Streifenbilder geschoben und für die Gesamtheit der vom Fenster erfassten Streifenbilder ein durchschnittlicher Sättigungswert berechnet. Es sei darauf hingewiesen, dass die Durchschnitts-Analyse für mindestens zwei Streifenbilder, insbesondere unter Verwendung eines Fensters, auch für andere in dieser Offenbarung beschriebene Analysen verwendet werden kann.

Bei einer bevorzugten Ausgestaltung führt die Analyse eine Transformation einer Farbinformation in mindestens einem Streifenbild aus dem Streifenbilddatenstrom in den L*a*b*-Farbraum durch und gibt an, ob Farbwerte von Pixeln in dem mindestens einen Streifenbild einen Grenzwert in einem a-Kanal des L*a*b*-Farbraums überschreiten, wobei das gesuchte Merkmal eine Anwesenheit eines metallischen Instruments ist.

Durch die Transformation des Farbraums in den L*a*b*-Farbraum können Instrumentenpixel, also solche Pixel, die einen Teil eines medizinischen Instruments abbilden, von Nicht-Instrumentenpixeln unterschieden werden. Hierbei wird ein Grenzwert im a-Kanal des L*a*b*-Farbraums betrachtet. Auf diese Weise kann man anhand eines Streifenbilds ein relevantes Videobild oder ein relevantes Videosegment identifizieren, bei dem medizinische Instrumente auf dem Video zu sehen sind. Bevorzugt wird der Grenzwert des a-Werts zumindest bei ungefähr 135 gewählt, wenn man einen Wertebereich von 0 - 255 zugrunde legt. Bei dem a-Wert handelt es sich um den Gegenfarbwert auf der Achse rot-grün. Bei bevorzugten Ausgestaltungen wird der Grenzwert durch eine Berechnung des Histogramms des Gegenfarbwerts berechnet. Man kann dies bevorzugt zusätzlich durch eine Extremwertanalyse unterstützen. Zudem kann der Grenzwert durch Versuche ermittelt werden.

Bei einer weiteren vorteilhaften Ausgestaltung ermittelt die Analyse in mindestens zwei Streifenbildern, bei denen die Farbwerte der Pixel den Grenzwert im a-Kanal überschreiten, die jeweilige Position der Pixel und erreicht aus einem Vergleich der Positionen der Pixel eine Bewegung der Pixel, wobei das gesuchte Merkmal eine Bewegung des metallischen Instruments ist.

Durch die Analyse der Positionen der Pixel, die den Grenzwert im a-Kanal überschreiten, erhält man zusätzlich Informationen über die Bewegung der Instrumente. Wird das Streifenbild durch einen vertikalen Maskenstreifen gewonnen, so erhält man eine Information über eine vertikale Bewegung mindestens eines Instruments. Die ermittelte Bewegung gibt Aufschluss darüber, ob, wie stark oder in welche Richtung ein Instrument bewegt wird. Auf diese Weise lässt sich nicht nur der Einsatz eines Instruments sondern auch eine bestimmte Operationstätigkeit erkennen. Wenn nur eine geringe Bewegung festgestellt wird, also das Bewegungsmuster ruhiger erscheint, kann dies insbesondere auf eine Haltefunktion des Instruments hindeuten. Bevorzugt werden zur Unterscheidung verschiedener Bewegungen oder Bewegungsmuster Tensor-Histogramme benutzt, die eine Orientierung der Pixel pro Zeiteinheit beschreiben.

Bei einer weiteren vorteilhaften Ausgestaltung ermittelt die Analyse einen Farbton in mindestens einem Streifenbild aus dem Streifenbilddatenstrom und gibt an, ob der Farbton einen Grenzwert eines Rotanteils überschreitet, wobei das gesuchte Merkmal eine Aufnahme innerhalb eines Körpers des Patienten ist.

Bei dieser Ausgestaltung wird bevorzugt der Hue-Kanal des HSV-Histogramms benutzt. Der Hue-Wert eines Pixels entspricht dem Winkel des Farbtons auf einem Farbkreis, wobei 0° für Rot steht, 120° für Grün und 240° für Blau. Innerhalb des Patienten liegt der Hue-Wert in der Nähe von Rot, einschließlich Ocker, Rosa und Hellrosa, also insbesondere zumindest ungefähr bei 0° bzw. 360°, was der Farbe Rot und ihren Abstufungen entspricht. Wenn der Hue-Kanalwert eines Streifenbilds in einem Bereich liegt, der von 120° bis 240° beabstandet ist, bevorzugt kleiner 120° oder größer 240°, besonders bevorzugt kleiner 90° oder größer 270° und insbesondere kleiner 60° oder größer 300°, deutet dies darauf hin, dass sich die Kamera innerhalb des Patienten befindet.

Bei einer bevorzugten Ausgestaltung ermittelt die Analyse eine Luminanz in mindestens einem Streifenbild aus dem Streifenbilddatenstrom und gibt an, ob die Luminanz einen Grenzwert überschreitet, wobei das gesuchte Merkmal eine Aufnahme außerhalb einer Umhäusung ist.

Diese Ausgestaltung ermöglicht es festzustellen, ob die Aufnahme außerhalb einer Umhäusung stattgefunden hat, beispielsweise außerhalb einer Aufbewahrungseinheit oder einer Aufwärmeeinheit. Dem liegt die Überlegung zugrunde, dass das Bild der Kamera sehr dunkel ist, insbesondere schwarz ist, wenn sich die Kamera in einer Umhäusung befindet. Dadurch ist auch das Streifenbild sehr dunkel bzw. ist die Luminanz des Streifenbilds gering. Umgekehrt, wenn die Luminanz den Grenzwert überschreitet, darf angenommen werden, dass die Aufnahme außerhalb einer Umhäusung stattgefunden hat.

Bei einer weiteren vorteilhaften Ausgestaltung ermittelt die Analyse einen Farbton in mindestens einem Streifenbild aus dem Streifenbilddatenstrom und gibt an, ob der Farbton einen Grenzwert eines Rotanteils überschreitet, wobei das gesuchte Merkmal eine Blutung ist.

Der Farbton wird dabei einerseits hinsichtlich des Hue-Werts analysiert und außerdem hinsichtlich eines Sättigungswerts und/oder Helligkeitswerts analysiert. Die erforderlichen Werte können durch Versuche ermittelt werden. Bei bevorzugten Ausgestaltungen wird geprüft, ob der Hue-Wert zwischen 330° und 5° liegt, bevorzugt zwischen 335° und 360° liegt und insbesondere zwischen 340° und 355° liegt. Außerdem wird geprüft, ob der Sättigungswert und/oder der Helligkeitswert bei mindestens 50%, bevorzugt mindestens 60%, besonders bevorzugt mindestens 70% und insbesondere bei mindestens 80% liegt. Die konkreten Werte ermittelt der Fachmann durch Versuche. Die Analyse kann natürlich auch in anderen Farbräumen durchgeführt werden, solange die Farbe von Blut, beispielsweise im Unterschied zu Körpergewebe, unterschieden werden kann.

Bei einer bevorzugten Ausgestaltung ermittelt die Analyse eine Farbsättigung der Farbe Rot in mindestens zwei Streifenbildern aus dem Streifenbilddatenstrom und gibt bei Anstieg der Farbsättigung im Verlaufe der Zeit das Vorhandensein des gesuchten Merkmals an, wobei das gesuchte Merkmal eine Blutung ist.

Diese Ausgestaltung ermöglicht eine erweiterte Erkennung einer Blutung. Da die Rot-Farbsättigung bei Betrachtung verschiedener Organe im menschlichen Körper unterschiedlich sein kann, stellt diese Ausgestaltung auf die Änderung der Farbsättigung der Farbe Rot ab. Wird ein Anstieg dieser Farbsättigung im Verlaufe der Zeit festgestellt, so wird daraus auf das Vorhandensein einer Blutung geschlossen. Bevorzugt werden dabei Mindestwerte für den Anstieg festgelegt, bei dessen Überschreiten eine Blutung angenommen wird. Ein markanter Anstieg dieser Farbsättigung markiert den Beginn einer potentiellen Szene mit Blutung. Ein Abfall der Sättigungswerte kann das Ende einer Szene mit Blutung markieren, so dass in entsprechender Weise auch das Ende einer Blutung identifiziert werden kann.

Bei einer weiteren vorteilhaften Ausgestaltung errechnet die Analyse durch Vergleich der Positionen von korrespondierenden Pixeln in mindestens zwei Streifenbildern aus dem Streifenbilddatenstrom eine Bewegung der Pixel, wobei das gesuchte Merkmal eine Bewegung der Aufnahmeeinheit ist, die das Video aufgenommen hat.

Diese Analyse ermöglicht die Überprüfung, ob bzw. wie stabil die Videokamera gehalten wurde. Hierzu kann insbesondere ein Tensor-Histogramm der Pixel herangezogen werden. Da sich bei einer Bewegung der Aufnahmeeinheit die Mehrzahl der Pixel zumindest ungefähr in eine einheitliche Richtung bewegt, kann eine Bewegung der Aufnahmeeinheit von einer Bewegung von Objekten innerhalb des Videobilds unterschieden werden. Durch eine Extremwertanalyse des Verlaufs des Tensor-Histogramms können insbesondere eine Stabilität der Kameraführung bzw. eine "Ruhigheit" von Szenen bewertet werden.

Bei einer weiteren vorteilhaften Ausgestaltung wertetet die Analyse mindestens ein Streifenbild aus dem Streifenbildstrom hinsichtlich eines Schärfegrads aus und gibt an, ob der Schärfegrad einen Grenzwert unterschreitet, wobei das gesuchte Merkmal eine Unschärfe ist.

Unscharfe Bereiche innerhalb eines Videos sind durch wenig sichtbare Kanten gekennzeichnet, insbesondere zwischen benachbarten Streifenbildern. Diese unscharfen Szenen lassen sich mittels bekannter Verfahren erkennen, insbesondere mittels der Difference-of-Gaussians-Methode. Insbesondere, wie weiter oben ausführlich erläutert, schiebt man ein Fenster über die Streifenbilder und misst diese Unterschiede, um die unscharfen Videobereiche zu identifizieren. Dem liegt auch die Erwägung zu Grunde, das sich innerhalb eines solchen Fensters, welches mehrere Streifenbilder enthält, die Anzahl der Kanten bei einem scharfen Bild viel stärker verringert als bei einem unscharfen Bild. Alternativ oder zusätzlich kann auch auf die Anzahl und/oder Prägnanz der Kanten abgestellt werden.

Bei einer weiteren vorteilhaften Ausgestaltung ist bei der Anwesenheit des metallischen Instruments und der Unschärfe das gesuchte Merkmal, dass sich die Aufnahmeeinheit, die das Video aufgenommen hat, in einem rohrförmigen Instrument befindet.

Bei dieser Ausgestaltung kann man beispielsweise erkennen, ob sich die Videokamera bei der Aufnahme in einem Trokar befand.

Bei einer weiteren vorteilhaften Ausgestaltung erzeugt die Analyse aus einem Zielbild unter Verwendung des Maskenstreifens ein Zielstreifenbild und vergleicht mindestens ein Streifenbild aus dem Streifenbilddatenstrom mit dem Zielstreifenbild, wobei das gesuchte Merkmal eine Übereinstimmung oder hochgradige Ähnlichkeit zwischen dem Zielstreifenbild und dem mindestens einen Streifenbild ist.

Auf diese Weise kann schnell und effektiv ein gesuchtes Zielbild in einem Videobilddatenstrom identifiziert werden. Da lediglich das erzeugte Zielstreifenbild mit den Streifenbildern aus dem Streifenbilddatenstrom verglichen wird, ist die Prüfung der Übereinstimmung bzw. der hochgradigen Ähnlichkeit sehr schnell zu bewerkstelligen.

Bei einer weiteren vorteilhaften Ausgestaltung weist die Vorrichtung ferner eine Streifenbilderzeugungseinrichtung auf, die dafür ausgebildet ist, das Video zu empfangen, die Videobilder mit Ausnahme des Maskenstreifens zu maskieren und daraus resultierende Streifenbilder als Streifenbilddatenstrom auszugeben, insbesondere an den Dateneingang.

Diese Ausgestaltung ermöglicht eine vollständige Verarbeitung beginnend mit dem Video, welches insbesondere während einer Operation durch eine endoskopische Kamera aufgenommen wurde, durchzuführen.

Bei einer weiteren vorteilhaften Ausgestaltung ist die Streifenbilderzeugungseinrichtung ferner dafür ausgebildet, die Videobilder vor dem Maskieren zu komprimieren und/oder die resultierenden Streifenbilder zu komprimieren, insbesondere unter Verwendung einer diskreten Kosinustransformation.

Diese Ausgestaltung ermöglicht eine besonders effektive Verarbeitung. Bei einer bevorzugten Ausgestaltung wird dabei die Größe des Videobilds und/oder des resultierenden Streifenbilds verringert. Die vorteilhafte Verwendung der diskreten Kosinustransformation macht sich den Vorteil zunutze, dass einige Bildinformationen wichtiger bzw. dominanter sind als andere Bildinformationen. Aus dem Ergebnis der Kosinustransformation werden dann nicht alle Koeffizienten weiter verwendet, sondern nur die vorderen, d.h. die wichtigsten, Koeffizienten. Insbesondere wird bei bevorzugten Ausgestaltungen lediglich der erste maßgebliche Koeffizient verwendet, der die Hauptfarbinformation eines oder mehrerer Pixel angibt. Dadurch kann die Datenmenge erheblich reduziert werden und die Beschleunigung der Verarbeitung erzielt werden.

Bei einer weiteren vorteilhaften Ausgestaltung wird das Komprimieren auf Blöcke von Pixeln des Videobilds angewendet, wobei die Blöcke insbesondere eine Größe von 8x8 Pixeln haben.

Diese Ausgestaltung ist vorteilhaft, da bekannte Bildformate, wie z.B. JPG oder MPEG auch mit Pixelblöcken mit 8x8 Pixeln arbeiten. Insbesondere in Verbindung mit der diskreten Kosinustransformation ergibt sich auf diese Weise eine sehr einfache Vergleichbarkeit zwischen den Bilddaten eines Streifenbilds und einem gesuchten Zielbild. Ein Vergleich zwischen einem gesuchten Zielbild und einem zu durchsuchenden Videostrom ist dann besonders leicht, wenn die gleiche Codierung verwendet wird, so dass die codierten Daten direkt miteinander verglichen werden können und nicht erst jeweils decodiert werden müssen.

Bei einer weiteren vorteilhaften Ausgestaltung ist die Streifenbilderzeugungseinrichtung dafür ausgebildet, einen ersten Streifenbilddatenstrom unter Verwendung eines ersten Maskenstreifens zu erzeugen und einen zweiten Streifenbilddatenstrom unter Verwendung eines zweiten Maskenstreifens zu erzeugen, wobei sich der erste Maskenstreifen und der zweite Maskenstreifen zumindest hinsichtlich einer Eigenschaft ausgewählt aus der Gruppe bestehend aus Breitenposition, Höhenposition, Streifenhöhe, Streifenbreite und Streifenwinkel unterscheiden.

Diese Ausgestaltung ermöglicht auch dann eine zuverlässige Identifizierung medizinisch relevanter Videoelemente, falls mehr als eine Stelle in den Videobildern die möglicherweise relevante Information enthalten könnte. Es werden dann an zwei oder mehr Stellen des Videobilds Maskenstreifen verwendet, um jeweilige Streifenbilddatenströme zu erzeugen. Tritt in einem der Streifenbilddatenströme ein gesuchtes Merkmal auf, so wird insgesamt angenommen, dass es sich um ein medizinisch relevantes Videoelement handelt. Alternativ können zwei Maskenstreifen bzw. zwei Streifenbilddatenströme auch für eine erhöhte Zuverlässigkeit verwendet werden. Insbesondere kann definiert werden, dass ein medizinisch relevantes Videoelement nur dann angezeigt wird, wenn ein oder mehrere gesuchte Merkmale in beiden Streifenbilddatenströmen vorhanden sind.

Es wird außerdem ein Verfahren zur automatischen Identifizierung medizinisch relevanter Videoelemente nach Anspruch 15 offenbart.

Es sei darauf hingewiesen, dass die Vorrichtung zur automatischen Identifizieren medizinisch relevanter Videoelemente in gleicher Weise auch zur Identifizierung medizinisch irrelevanter Videoelemente verwendet werden kann. Hierzu wird einfach auf das entsprechende gegenteilige Merkmal abgestellt. So kann einerseits ein medizinisch relevantes Videoelement dadurch identifiziert werden, dass eine ausreichende Schärfe vorhanden ist, umgekehrt kann ein medizinisch irrelevantes Videoelement dadurch identifiziert werden, dass keine ausreichende Schärfe vorhanden ist. Oder, als weiteres Beispiel, ein medizinisch relevantes Videoelement kann dadurch identifiziert werden, dass die Luminanz einen Grenzwert überschreitet. Im Gegenteil dazu, kann ein medizinisch irrelevantes Videoelement dadurch identifiziert werden, dass die Luminanz einen Grenzwert unterschreitet bzw. nicht überschreitet.

Ausführungsbeispiele der Erfindung sind in der Zeichnung dargestellt und werden in der nachfolgenden Beschreibung näher erläutert. Es zeigen:
- Fig. 1: eine Ausführungsform einer Vorrichtung zur automatischen Identifizierung medizinisch relevanter Videoelemente;
- Fig. 2: zeigt ein Ausführungsbeispiel eines Maskenstreifens;
- Fig. 3: zeigt ein beispielhaftes endoskopisches Videobild;
- Fig. 4: zeigt ein weiteres Ausführungsbeispiel eines Maskenstreifens;
- Fig. 5: zeigt ein Ausführungsbeispiel eines Streifenbilds, welches durch Anwendung des Maskenstreifens entsteht;
- Fig. 6 bis 13: zeigen weitere Ausführungsbeispiele von einem oder mehreren Maskenstreifen;
- Fig. 14 bis 21: zeigen Ausführungsbeispiele bei der Verwendung von Pixelblöcken;
- Fig. 22: zeigt eine erste Ausführungsform einer schematischen Darstellung unter Verwendung von Streifenbildern;
- Fig. 23: zeigt eine zweite Ausführungsform einer schematischen Darstellung unter Verwendung von Streifenbildern;
- Fig. 24: zeigt eine erste Ausführungsform einer konkreten grafischen Darstellung unter Verwendung von Streifenbildern; und
- Fig. 25: zeigt eine zweite Ausführungsform einer konkreten grafischen Darstellung unter Verwendung von Streifenbildern.

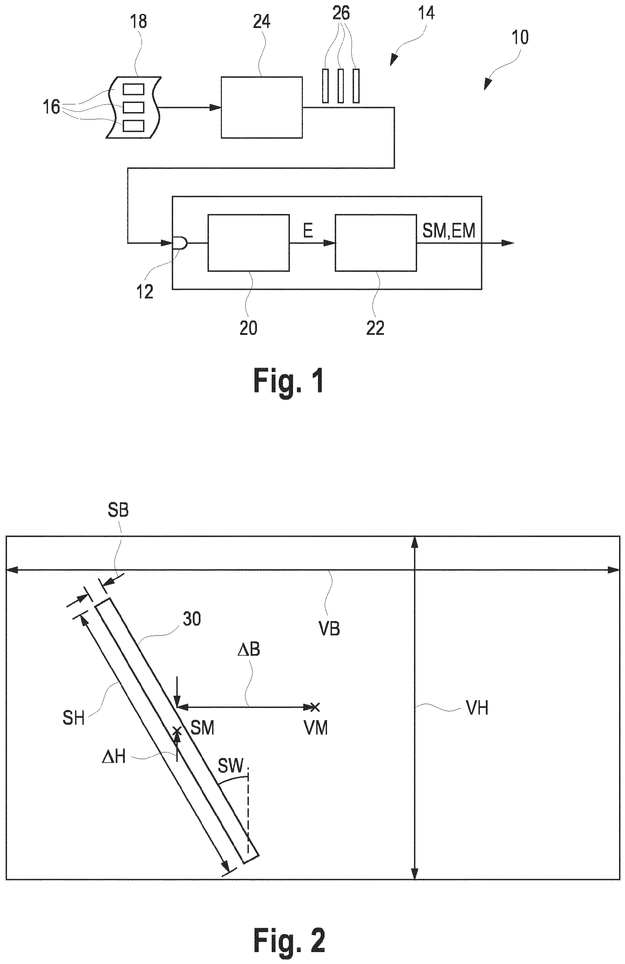

Fig. 1 zeigt eine Ausführungsform einer Vorrichtung 10 zur automatischen Identifizierung medizinisch relevanter Videoelemente. Die Vorrichtung 10 weist einen Dateneingang 12 auf, der dafür ausgebildet ist, einen Streifenbilddatenstrom 14 zu empfangen, wobei der Streifenbilddatenstrom 14 einen zeitlichen Verlauf einer Streifenbildansicht, die von einem Maskenstreifen 30 (siehe Fig. 2) definiert ist, von Videobildern 16 aus einem Video 18 repräsentiert, welches während einer medizinischen Operation an einem Patienten aufgenommen wurde.

Eine Analysevorrichtung 20 ist dafür ausgebildet, den Streifenbilddatenstrom 14 mittels einer Analyse, die mindestens einen vorgegebenen Analyseschritt aufweist, auf das Vorhandensein mindestens eines gesuchten Merkmals zu analysieren und ein Ergebnis E des Vorhandenseins auszugeben.

Ferner weist die Vorrichtung 10 eine Verarbeitungseinrichtung 22 auf, die dafür ausgebildet ist, eine Startmarke SM auszugeben, die eine Zuordnung zwischen dem Vorhandensein und einer Position in dem Streifenbilddatenstrom 14 angibt, wenn das Ergebnis E das Vorhandensein des gesuchten Merkmals angibt. Bei dieser Ausgestaltung kann die Verarbeitungseinrichtung 22 außerdem eine Endmarke EM ausgeben, die eine Zuordnung zwischen einem fehlenden Vorhandensein und einer Position in dem Streifenbilddatenstrom 14 angibt, wenn das Ergebnis E das fehlende Vorhandensein des gesuchten Merkmals angibt, nachdem zuvor die Startmarke SM ausgegeben wurde.

Die Vorrichtung 10 weist hier ferner eine Streifenbilderzeugungseinrichtung 24 auf, die dafür ausgebildet ist, das Video 18 zu empfangen, die Videobilder 16 mit Ausnahme des Maskenstreifens 30 zu maskieren und daraus resultierende Streifenbilder 26 als Streifenbilddatenstrom 14 auszugeben, insbesondere an den Dateneingang 12.

Fig. 2 zeigt ein Ausführungsbeispiel eines Maskenstreifens.

Fig. 2 zeigt eine Möglichkeit auf, die charakteristischen Werte des Maskenstreifens 30 zu beschreiben. Dabei beschreibt VH die Höhe eines Videobilds 16, VB die Breite eines Videobilds 16 und VM den Mittelpunkt eines Videobilds 18. SH beschreibt eine Höhe des Maskenstreifens 30, SB eine Breite des Maskenstreifens 30 und SM einen Mittelpunkt des Maskenstreifens 30. Eine Distanz zwischen dem Mittelpunkt VM des Videos und des Mittelpunkts SM des Maskenstreifens 30 beträgt entlang der Breitenrichtung des Videobilds 16 einen Wert ΔB und entlang der Höhenrichtung des Videobilds 16 einen Wert ΔH. Ein Streifenwinkel SW des Maskenstreifens 30 ist hier auf die Höhenrichtung des Videobilds 16 bezogen.

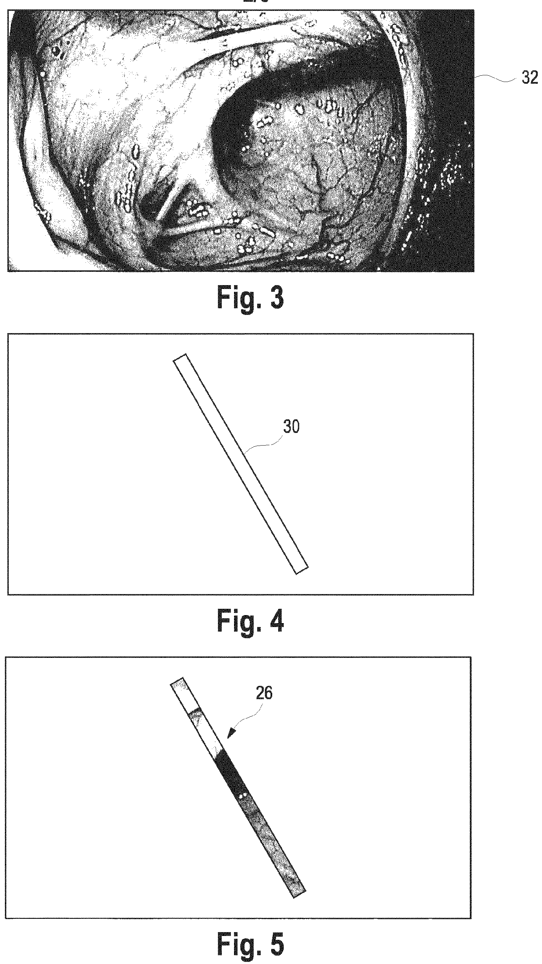

Fig. 3 zeigt ein beispielhaftes endoskopisches Videobild.

Fig. 4 zeigt ein weiteres Ausführungsbeispiel eines Maskenstreifens.

Fig. 5 zeigt ein Ausführungsbeispiel eines Streifenbilds, welches durch Anwendung des Maskenstreifens entsteht. Bevor das Streifenbild 26 in den Streifenbilddatenstrom 14 überführt wird, wird das Streifenbild 26 bevorzugt in eine senkrechte Orientierung gedreht, damit die Streifenbilder 26 im Streifenbilddatenstrom 14 entlang ihrer langen Seite aneinander anliegen.

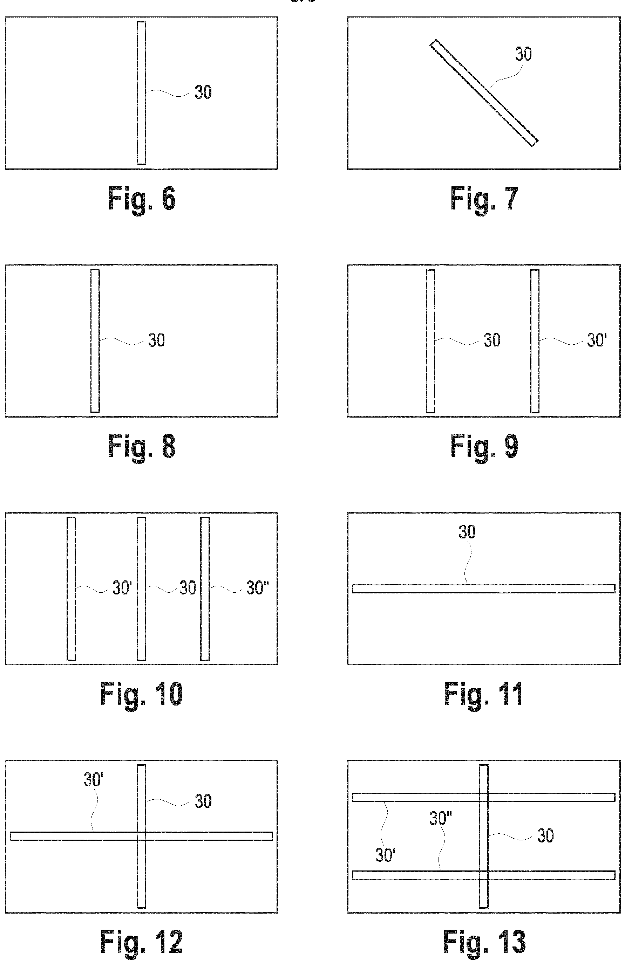

Fig. 6 zeigt eine Ausführungsform eines Maskenstreifens 30, der mittig und vertikal angeordnet ist.

Fig. 7 zeigt eine Ausführungsform eines Maskenstreifens 30, der mittig und in einem Winkel von 45° angeordnet ist.

Fig. 8 zeigt eine Ausführungsform eines Maskenstreifens 30, der bei ungefähr 33% der Breite VB des Videobilds und vertikal angeordnet ist.

Fig. 9 zeigt eine Ausführungsform mit einem ersten Maskenstreifen 30 und einem zweiten Maskenstreifen 30', die vertikal ausgerichtet sind. Der erste Maskenstreifen 30 ist bei ungefähr 33% der Bildbreite angeordnet, und der zweite Maskenstreifen 30' ist bei ungefähr 67% der Bildbreite angeordnet.

Fig. 10 zeigt eine Ausführungsform mit einem ersten Maskenstreifen 30, einem zweiten Maskenstreifen 30' und einem dritten Maskenstreifen 30", die vertikal ausgerichtet sind. Der erste Maskenstreifen 30 ist bei ungefähr 50% der Bildbreite angeordnet, der zweite Maskenstreifen 30' ist bei ungefähr 25% der Bildbreite angeordnet, und der dritte Maskenstreifen 30" ist bei ungefähr 75% der Bildbreite angeordnet.

Fig. 11 zeigt eine Ausführungsform eines Maskenstreifens 30, der bei ungefähr 50% der Höhe VH des Videobilds und horizontal angeordnet ist.

Fig. 12 zeigt eine Kombination der Maskenstreifen gemäß Fig. 6 und Fig. 11.

Fig. 13 zeigt eine Ausführungsform mit einem vertikalen ersten Maskenstreifen 30, einem horizontalen zweiten Maskenstreifen 30' und einem horizontalen dritten Maskenstreifen 30". Der erste Maskenstreifen 30 ist bei ungefähr 50% der Bildbreite angeordnet, der zweite Maskenstreifen 30' ist bei ungefähr 33% der Bildhöhe angeordnet, und der dritte Maskenstreifen 30" ist bei ungefähr 67% der Bildhöhe angeordnet.

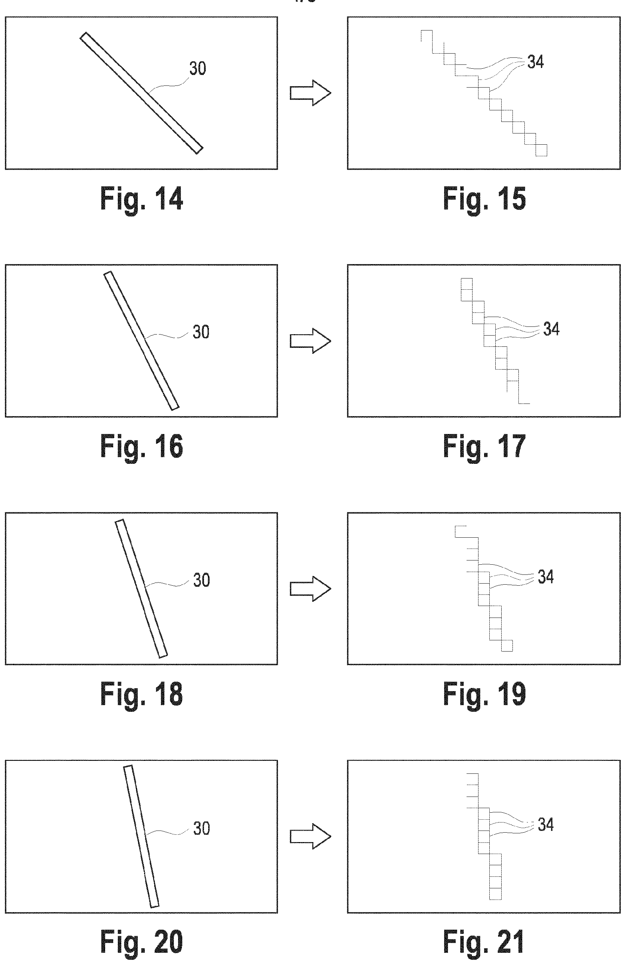

Fig. 14 zeigt einen Maskenstreifen 30, der mittig in einem Winkel von in etwa 45° angeordnet ist. In Fig. 15 ist symbolisch dargestellt, wie dieser Maskenstreifen 30 durch Pixelblöcke 34 abgebildet werden kann, wobei die Pixelblöcke 34 insbesondere eine Größe von 8x8 Pixeln haben.

Fig. 16 zeigt einen Maskenstreifen 30, der mittig in einem Winkel von in etwa 26° angeordnet ist. In Fig. 17 ist symbolisch dargestellt, wie dieser Maskenstreifen 30 durch Pixelblöcke 34 abgebildet werden kann, wobei die Pixelblöcke 34 insbesondere eine Größe von 8 x 8 Pixeln haben.

Fig. 18 zeigt einen Maskenstreifen 30, der mittig in einem Winkel von in etwa 18° angeordnet ist. In Fig. 19 ist symbolisch dargestellt, wie dieser Maskenstreifen 30 durch Pixelblöcke 34 abgebildet werden kann, wobei die Pixelblöcke 34 insbesondere eine Größe von 8x8 Pixeln haben.

Fig. 20 zeigt einen Maskenstreifen 30, der mittig in einem Winkel von in etwa 11° angeordnet ist. In Fig. 21 ist symbolisch dargestellt, wie dieser Maskenstreifen 30 durch Pixelblöcke 34 abgebildet werden kann, wobei die Pixelblöcke 34 insbesondere eine Größe von 8x8 Pixeln haben.

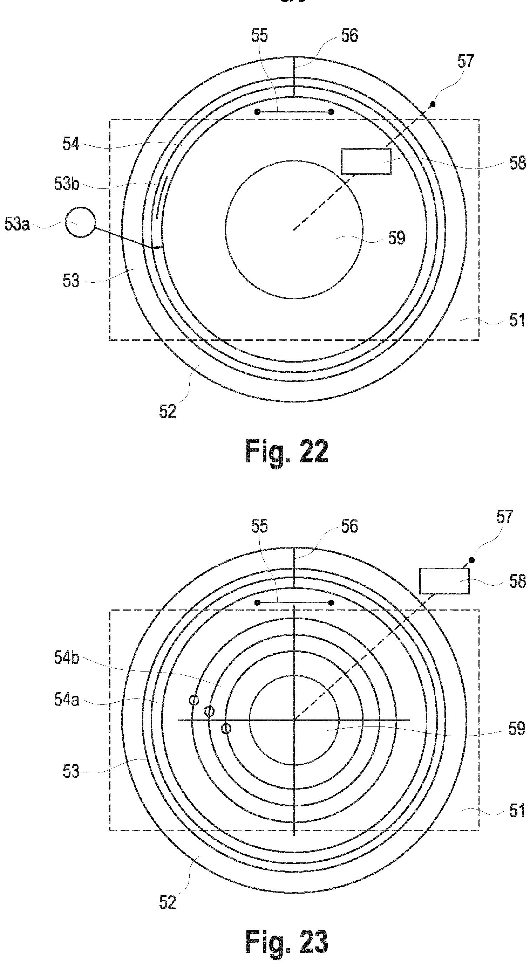

Fig. 22 zeigt eine erste Ausführungsform einer schematischen Darstellung unter Verwendung von Streifenbildern. Es sind gezeigt: ein Videobereich 51, eine kreisförmige Darstellung 52 aller Streifenbilder 26, insbesondere in der Form eines Videogramms, eine kreisförmige Darstellung 53 der Operationsphasen, einen Indikator 53a von relevanten Videobildern mit einer Thumbnail-Vorschau, einen Indikator 53b von relevanten Videosegmenten, einen kreisförmigen Indikator 54 für die Anzeige einer Qualität des Videoinhalts, einen Indikator 55, der eine Zeit und einen Zoomfaktor angibt, einen Indikator 56, der den Zeitpunkt des im Videobereich 51 dargestellten Bilds innerhalb des Streifenbilddatenstroms 14 bzw. innerhalb des Videos 18 darstellt, einen Multifunktionszeiger 57 mit einer Thumbnail-Vorschau, ein Vorschaufenster 58 und ein Steuerbereich 59.

Das Video wird in 51 dargestellt. Als Ergebnis einer Nachbearbeitung der Videodaten und einer komprimierten Visualisierung des Videos 18 als Streifenbilddatenstrom 14 wird in 52 dargestellt. Operationsphasen, wie sie beispielsweise ein Benutzer markiert hat, werden in 53 angezeigt.

Medizinisch relevante Videoelemente werden in 53a und 53b dargestellt. Eine Bewertung wird in 54 dargestellt, wobei bei einer bevorzugten Ausführungsform die folgenden Farben verwendet werden: grün als Hinweis auf eine gute Qualität der Bilder, orange als Hinweis auf eine schlechte Qualität (z.B. verschwommen, zu dunkel, verwackelt), blau als Hinweis auf eine Aufnahme außerhalb des Körpers des Patienten, dunkelblau als Hinweis auf eine Fluoreszenzaufnahme, und schwarz wenn keine Bewertung vorgenommen wurde. Auf die Zeit bezogene Information, insbesondere die Länge des Videos oder ein Zoomfaktor, sind in 55 dargestellt. Der aktuelle Zeitpunkt beim Abspielen des Videos ist in 56 dargestellt.

Unter Verwendung des multifunktionalen Zeigers 57 ist es möglich, zu einem bestimmten Zeitpunkt zu springen. Das Vorschaufenster 58 zeigt den entsprechenden Frame von der entsprechenden Position innerhalb des Videos. Zusätzlich zu der automatischen Identifizierung medizinisch relevanter Videoelemente können sowohl weitere relevante Videoelemente als auch Texthinweise, Sprachaufnahmen und Zeichnungen manuell unter Verwendung eines Kontextmenüs des multifunktionalen Zeigers 57 hinzugefügt werden. Das Kontextmenü kann dabei insbesondere Funktionen aufweisen wie "POI löschen", "SOI löschen", "Startmarke des POI verändern", "Startmarke/Endmarke des SOI verändern", "Beschreibung hinzufügen" und "In Playlist exportieren". Das Exportieren in eine Playlist bedeutet, dass manuell markierte Segmente oder automatisch erkannte Segmente zusammengefügt und dann exportiert werden. Die so exportierten Daten repräsentieren nur einen Teil der Daten, die insgesamt zur Verfügung stehen. Auf Wunsch werden auch nur diese Daten in der kreisförmigen Darstellung angezeigt.

Zur Steuerung des Videos werden Funktionen wie "Start", "Stopp", "Pause", "Schneller Vorlauf", "Schneller Rücklauf", "Sprung zum nächsten POI", "Sprung zum vorhergehenden POI" in 59 zur Verfügung gestellt, sobald ein Bedienelement, insbesondere eine Maus, in diesen Bereich eintritt. Die Geschwindigkeit des schnellen Vorlaufs bzw. schnellen Rücklaufs ist konfigurierbar.

Wenn das Video 18 abgespielt wird, wird es in 51 angezeigt und die Darstellungen 52, 53, 54 sowie die Indikatoren 53a, 53b drehen sich gegen den Uhrzeigersinn mit einer Geschwindigkeit, die mit der "gezoomten" Länge des Videos 18 korrespondiert. Der aktuelle Zeitpunkt wird in der 12 Uhr-Position in 56 angezeigt. Bei anderen Ausgestaltungen können die Darstellungen 52, 53, 54 und die Indikatoren 53a, 53b auch statisch bleiben und 56 bewegt sich im Uhrzeigersinn.

An einem Bedienelement, insbesondere an einem Mausrad, kann bei 55 der Zoomfaktor verändert werden. Wird das Mausrad nach vorne bewegt, erhöht dies den Zoomfaktor und nur der entsprechende Teil des Videos wird in 51 angezeigt. Die Darstellung der Daten bei 52, 53, 54, 53a und 53b wird entsprechend angepasst, wie auch die Geschwindigkeit der kreisförmigen Darstellungen. Wird das Mausrad rückwärts gedreht, verringert sich der Zoomfaktor und die genannten Anpassungen erfolgen entsprechend.

Fig. 23 zeigt eine zweite Ausführungsform einer schematischen Darstellung unter Verwendung von Streifenbildern. Es sind gezeigt: ein Videobereich 51, eine kreisförmige Darstellung 52 aller Streifenbilder 26, insbesondere in der Form eines Videogramms, eine kreisförmige Darstellung 53 der Operationsphasen, ein kreisförmiger Indikator 54a von relevanten Videobildern und relevanten Videosegmenten, konfigurierbare kreisförmige Indikatoren 54b von relevanten Videobildern und relevanten Videosegmenten, die von anderen medizinischen Datenquellen kommen (z.B. medizinische Geräte, Navigationssysteme, Prozessmanagementsysteme, Anästhesiesysteme, bildgebende Radiologiesysteme), ein Indikator 55, der eine Zeit und einen Zoomfaktor angibt, ein Indikator 56, der den Zeitpunkt des im Videobereich 51 dargestellten Bilds innerhalb des Streifenbilddatenstroms 14 bzw. innerhalb des Videos 18 darstellt, ein Multifunktionszeiger 57 mit einer Thumbnail-Vorschau, ein Vorschaufenster 58 und ein Steuerbereich 59.

Bezüglich der Funktionsweise gelten die Erläuterungen zu Fig. 22 entsprechend. Die genannten Farben sind in der schwarz-weißen Darstellung durch entsprechende Schraffuren symbolisiert.

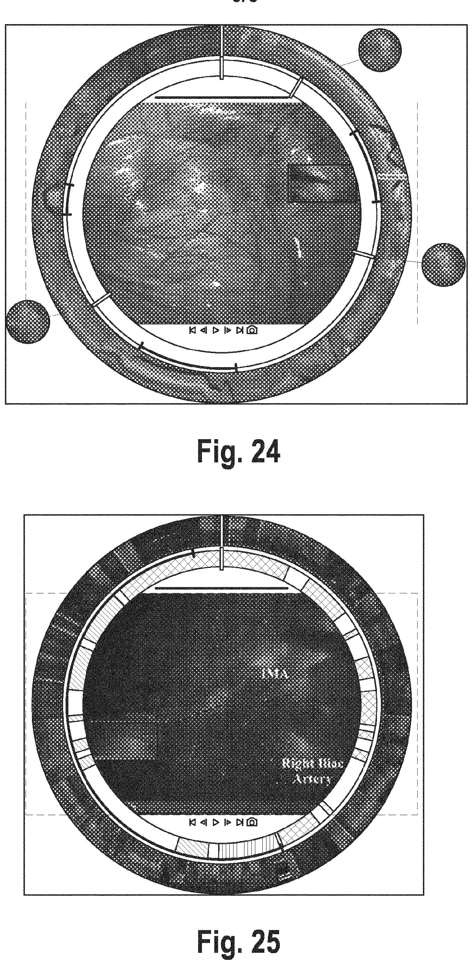

Fig. 24 zeigt eine erste Ausführungsform einer konkreten grafischen Darstellung unter Verwendung von Streifenbildern.

Fig. 25 zeigt eine zweite Ausführungsform einer konkreten grafischen Darstellung unter Verwendung von Streifenbildern.

## Patentansprüche

1. Vorrichtung (10) zur automatischen Identifizierung medizinisch relevanter Videoelemente, die Vorrichtung aufweisend:
- einen Dateneingang (12), der dafür ausgebildet ist, einen Streifenbilddatenstrom (14) zu empfangen, wobei der Streifenbilddatenstrom einen zeitlichen Verlauf einer Streifenbildansicht von Videobildern (16) aus einem Video (18) repräsentiert, welches während einer medizinischen Operation an einem Patienten aufgenommen wurde, wobei die Streifenbildansicht durch einen Maskenstreifen (30) definiert ist, der einen Ausschnitt mit einer zumindest im Wesentlichen rechteckigen oder geradlinigen Form aus den Videobildern definiert, wobei eine Streifenbreite des Maskenstreifens höchstens 16 Pixel beträgt,
- eine Analysevorrichtung (20), die dafür ausgebildet ist, den Streifenbilddatenstrom mittels einer Analyse, die mindestens einen vorgegebenen Analyseschritt aufweist, auf das Vorhandensein mindestens eines gesuchten Merkmals zu analysieren und ein Ergebnis (E) des Vorhandenseins auszugeben, und
- eine Verarbeitungseinrichtung (22), die dafür ausgebildet ist, eine Startmarke (SM) auszugeben, die eine Zuordnung zwischen dem Vorhandensein und einer Position in dem Streifenbilddatenstrom angibt, wenn das Ergebnis das Vorhandensein des gesuchten Merkmals angibt.

2. Vorrichtung nach Anspruch 1, wobei die Analyse eine Farbsättigung in mindestens einem Streifenbild (26) aus dem Streifenbilddatenstrom (14) ermittelt und bei Unterschreiten eines Schwellwerts der Farbsättigung das Vorhandensein des gesuchten Merkmals angibt, wobei das gesuchte Merkmal eine Rauchentwicklung ist.

3. Vorrichtung nach einem der vorhergehenden Ansprüche, wobei die Analyse eine Transformation einer Farbinformation in mindestens einem Streifenbild (26) aus dem Streifenbilddatenstrom (14) in den L*a*b*-Farbraum durchführt und angibt, ob Farbwerte von Pixeln in dem mindestens einen Streifenbild einen Grenzwert in einem a-Kanal des L*a*b*-Farbraums überschreiten, wobei das gesuchte Merkmal eine Anwesenheit eines metallischen Instruments ist.

4. Vorrichtung nach Anspruch 3, wobei die Analyse in mindestens zwei Streifenbildern (26), bei denen die Farbwerte der Pixel den Grenzwert im a-Kanal überschreiten, die jeweilige Position der Pixel ermittelt und aus einem Vergleich der Positionen der Pixel eine Bewegung der Pixel errechnet, wobei das gesuchte Merkmal eine Bewegung des metallischen Instruments ist.

5. Vorrichtung nach einem der vorhergehenden Ansprüche, wobei die Analyse einen Farbton in mindestens einem Streifenbild (26) aus dem Streifenbilddatenstrom (14) ermittelt und angibt, ob der Farbton einen Grenzwert eines Rotanteils überschreitet, wobei das gesuchte Merkmal eine Aufnahme innerhalb eines Körpers des Patienten ist.

6. Vorrichtung nach einem der vorhergehenden Ansprüche, wobei die Analyse eine Luminanz in mindestens einem Streifenbild (26) aus dem Streifenbilddatenstrom (14) ermittelt und angibt, ob die Luminanz einen Grenzwert überschreitet, wobei das gesuchte Merkmal eine Aufnahme außerhalb einer Umhäusung ist.

7. Vorrichtung nach einem der vorhergehenden Ansprüche, wobei die Analyse einen Farbton in mindestens einem Streifenbild (26) aus dem Streifenbilddatenstrom (14) ermittelt und angibt, ob der Farbton einen Grenzwert eines Rotanteils überschreitet, wobei das gesuchte Merkmal eine Blutung ist.

8. Vorrichtung nach einem der vorhergehenden Ansprüche, wobei die Analyse durch Vergleich der Positionen von korrespondierenden Pixeln in mindestens zwei Streifenbildern (26) aus dem Streifenbilddatenstrom (14) eine Bewegung der Pixel errechnet, wobei das gesuchte Merkmal eine Bewegung der Aufnahmeeinheit ist, die das Video (18) aufgenommen hat.

9. Vorrichtung nach einem der vorhergehenden Ansprüche, wobei die Analyse mindestens ein Streifenbild (26) aus dem Streifenbilddatenstrom (14) hinsichtlich eines Schärfegrads auswertet und angibt, ob der Schärfegrad einen Grenzwert unterschreitet, wobei das gesuchte Merkmal eine Unschärfe ist.

10. Vorrichtung nach Anspruch 3 und 9, wobei bei der Anwesenheit des metallischen Instruments und der Unschärfe das gesuchte Merkmal ist, dass sich die Aufnahmeeinheit, die das Video (18) aufgenommen hat, in einem rohrförmigen Instrument befindet.

11. Vorrichtung nach einem der vorhergehenden Ansprüche, wobei die Analyse aus einem Zielbild unter Verwendung des Maskenstreifens (30) ein Zielstreifenbild erzeugt und mindestens ein Streifenbild (26) aus dem Streifenbilddatenstrom (14) mit dem Zielstreifenbild vergleicht, wobei das gesuchte Merkmal eine Übereinstimmung oder hochgradige Ähnlichkeit zwischen dem Zielstreifenbild und dem mindestens einen Streifenbild (26) ist.

12. Vorrichtung nach einem der vorhergehenden Ansprüche, ferner mit einer Streifenbilderzeugungseinrichtung (24), die dafür ausgebildet ist, das Video (18) zu empfangen, die Videobilder (16) mit Ausnahme des Maskenstreifens (30) zu maskieren und daraus resultierende Streifenbilder (26) als Streifenbilddatenstrom (14) auszugeben, insbesondere an den Dateneingang (12).

13. Vorrichtung nach Anspruch 12, wobei die Streifenbilderzeugungseinrichtung (24) ferner dafür ausgebildet ist, die Videobilder (16) vor dem Maskieren zu komprimieren und/oder die resultierenden Streifenbilder (26) zu komprimieren, insbesondere unter Verwendung einer diskreten Kosinustransformation.

14. Vorrichtung nach Anspruch 13, wobei das Komprimieren auf Blöcke (34) von Pixeln des Videobilds (16) angewendet wird, wobei die Blöcke insbesondere eine Größe von 8x8 Pixeln haben.

15. Verfahren zur automatischen Identifizierung medizinisch relevanter Videoelemente, das Verfahren mit den Schritten:
- Empfangen, über einen Dateneingang (12), eines Streifenbilddatenstroms (14), wobei der Streifenbilddatenstrom einen zeitlichen Verlauf einer Streifenbildansicht von Videobildern (16) aus einem Video (18) repräsentiert, welches während einer medizinischen Operation an einem Patienten aufgenommen wurde, wobei die Streifenbildansicht durch einen Maskenstreifen (30) definiert ist, der einen Ausschnitt mit einer zumindest im Wesentlichen rechteckigen oder geradlinigen Form aus den Videobildern definiert, wobei eine Streifenbreite des Maskenstreifens höchstens 16 Pixel beträgt,
- Analysieren, mittels einer Analyse, die mindestens einen vorgegebenen Analyseschritt aufweist, des Streifenbilddatenstroms auf das Vorhandensein mindestens eines gesuchten Merkmals,
- Ausgeben eines Ergebnisses (E) des Vorhandenseins, und
- Ausgeben einer Startmarke (SM), die eine Zuordnung zwischen dem Vorhandensein und einer Position in dem Streifenbilddatenstrom angibt, wenn das Ergebnis das Vorhandensein des gesuchten Merkmals angibt.

## Claims

1. Apparatus (10) for an automatic identification of medically relevant video elements, the apparatus comprising:
- a data input (12), configured to receive a data stream (14) of image slices, wherein the data stream of image slices represents a temporal course of a view of image slices defined by a masking strip (30) of video images (16) from a video (18) which has been recorded during a medical surgery on a patient, wherein the a view of image slices is defined by a masking strip (30) defining a section having an at least substantially rectangular or rectilinear shape from the video images, a strip width of the masking strip being at most 16 pixels,
- an analysis apparatus (20) configured to analyze the data stream of image slices via an analysis comprising at least one predefined analysis step for the presence of at least one sought-for feature and to output a result (E) of the presence, and
- a processing device (22) configured to output a start mark (SM) which indicates a correspondence between the presence and a position in the data stream of image slices if the result indicates the presence of the sought-for feature.

2. Apparatus of claim 1, wherein the analysis determines a color saturation in at least one image slice (26) from the data stream (14) of image slices and indicates the presence of the sought-for feature if the color saturation falls below a threshold of the color saturation, wherein the sought-for feature is a smoke emission.

3. Apparatus according to any preceding claim, wherein the analysis performs a transformation of color information in at least one image slice (26) from the data stream (14) of image slices into the L*a*b* color space and indicates whether color values of pixel in the at least one image slice exceed a threshold in an a-channel of the L*a*b* color space, wherein the sought-for feature is the presence of a metallic instrument.

4. Apparatus of claim 3, wherein the analysis in at least two image slices (26) where the color values of the pixels exceed the threshold in the a-channel, determines the respective position of the pixels and calculates from a comparison of the positions of the pixels a movement of the pixels, wherein the sought-for feature is a movement of the metallic instrument.

5. Apparatus according to any preceding claim, wherein the analysis determines a hue in at least one image slice (26) from the data stream (14) of image slices and indicates whether the hue exceeds a threshold of a red component, wherein the sought-for feature is a recording within a body of the patient.

6. Apparatus according to any preceding claim, wherein the analysis determines a luminance in at least one image slice (26) from the data stream (14) of image slices and indicates whether the luminance exceeds a threshold, wherein the sought-for feature is a recording is outside of a housing.

7. Apparatus according to any preceding claim, wherein the analysis determines a hue in at least one image slice (26) from the data stream (14) of image slices and indicates whether the hue exceeds a threshold of a red component, wherein the sought-for feature is a bleeding.

8. Apparatus according to any preceding claim, wherein the analysis calculates by comparing the positions of corresponding pixels in at least two image slices (26) from the data stream (14) of image slices a movement of pixels, wherein the sought-for feature is a movement of the recording device that recorded the video (18).

9. Apparatus according to any preceding claim, wherein the analysis evaluates at least one image slice (26) from the data stream (14) of image slices regarding a degree of sharpness and indicates whether the degree of sharpness falls below a threshold, wherein the sought-for feature is a blurring.

10. Apparatus of claim 3 and 9, wherein upon presence of the metallic instrument and the blurring the sought-for feature is that the recording device which recorded the video (18) is located in a tubular instrument.

11. Apparatus according to any preceding claim, wherein the analysis generates a target image slice from a target image using the mask strip (30) and compares at least one image slice (26) from the data stream (14) of image slices with the target image slice, wherein the sought-for feature is a match or a high similarity between the target image slice and the at least one image slice (26).

12. Apparatus according to any preceding claim, further comprising a generation device (24) for image slices configured to receive the video (18), to mask the video images (16) except for the mask strip (30) and to output resulting image slices (26) as a data stream (14) of image slices, in particular to the data input (12).

13. Apparatus according to claim 12, wherein the generation device (24) for image slices is configured to compress the video images (16) before masking and/or to compress the resulting image slices (26), in particular using a discrete cosine transformation..

14. Apparatus according to claim 13, wherein the compression is applied to blocks (34) of pixels of the video image (16), wherein the blocks, in particular, have a size of 8x8 pixels.

15. Method for an automatic identification of medically relevant video elements, the method comprising the steps of:
- receiving, via a data input (12), a data stream (14) of image slices, wherein the data stream of image slices represents a temporal course of a view of image slices defined by a masking strip (30) of video images (16) from a video (18) which has been recorded during a medical surgery on a patient,
- analyzing, via an analysis comprising at least one predefined analysis step, the data stream of image slices for the presence of a sought-for feature,
- outputting a result (E) of the presence, and
- outputting a start mark (SM) which indicates a correspondence between the presence and a position in the data stream of image slices, if the result indicates the presence of the sought-for feature.

## Revendications

1. Dispositif (10) pour identifier automatiquement des éléments vidéo médicalement pertinents, le dispositif comprenant :
- une entrée de données (12) adaptée pour recevoir un flux de données d'image de bande (14), le flux de données d'image de bande représentant un progression temporelle d'une vue d'image de bande d'images vidéo (16) à partir d'une vidéo (18) prise pendant une opération médicale sur un patient, la vue d'image de bande étant définie par une bande de masque (30) définissant une section ayant une forme au moins essentiellement rectangulaire ou rectiligne à partir des images vidéo, dans laquelle une largeur de bande de la bande de masque est au plus de 16 pixels,
- un dispositif d'analyse (20) adapté pour analyser le flux de données d'image de bande pour la présence d'au moins une caractéristique recherchée au moyen d'une analyse comprenant au moins une étape d'analyse prédéterminée et pour dépenser un résultat (E) de la présence, et
- un moyen de traitement (22) adapté pour sortir une marque de départ (SM) indiquant une association entre la présence et une position dans le flux de données d'image de bande lorsque le résultat indique la présence de la caractéristique recherchée.

2. Appareil selon la revendication 1, dans lequel l'analyse détermine une saturation de couleur dans au moins une image de bande (26) à partir du flux de données d'image de bande (14) et indique la présence de la caractéristique recherchée lorsque la saturation de couleur tombe en dessous d'une valeur seuil, dans lequel la caractéristique recherchée est un développement de fumée.

3. Appareil selon l'une quelconque des revendications précédentes, dans lequel l'analyse effectue une transformation des informations de couleur dans au moins une image de bande (26) à partir du flux de données d'image de bande (14) dans l'espace de couleur L*a*b* et indique si les valeurs de couleur des pixels dans la au moins une image de bande dépassent une valeur seuil dans un canal a de l'espace de couleur L*a*b*, dans lequel la caractéristique recherchée est une présence d'un instrument métallique.

4. Appareil selon la revendication 3, dans lequel l'analyse détermine la position respective des pixels dans au moins deux images de bande (26) dans lesquelles les valeurs de couleur des pixels dépassent la valeur seuil dans le canal a et calcule un mouvement des pixels à partir d'une comparaison des positions des pixels, dans lequel la caractéristique recherchée est un mouvement de l'instrument métallique.

5. Appareil selon l'une quelconque des revendications précédentes, dans lequel l'analyse détermine une teinte dans au moins une image de bande (26) à partir du flux de données d'image de bande (14) et indique si la teinte dépasse une valeur de seuil d'une composante rouge, dans lequel la caractéristique recherchée est une image dans un corps du patient.

6. Appareil selon l'une quelconque des revendications précédentes, dans lequel l'analyse détermine une luminance dans au moins une image de bande (26) à partir du flux de données d'image de bande (14) et indique si la luminance dépasse une valeur seuil, dans lequel la caractéristique recherchée est une prise de vue à l'extérieur d'une enceinte.

7. Appareil selon l'une quelconque des revendications précédentes, dans lequel l'analyse détermine une teinte dans au moins une image de bande (26) à partir du flux de données d'image de bande (14) et indique si la teinte dépasse une valeur de seuil d'une composante rouge, dans lequel la caractéristique recherchée est le saignement.

8. Appareil selon l'une quelconque des revendications précédentes, dans lequel l'analyse calcule un mouvement des pixels en comparant les positions des pixels correspondants dans au moins deux images de bande (26) provenant du flux de données d'images de bande (14), dans lequel la caractéristique recherchée est un mouvement de l'unité d'enregistrement qui a enregistré la vidéo (18).

9. Appareil selon l'une quelconque des revendications précédentes, dans lequel l'analyse évalue au moins une image de bande (26) du flux de données d'images de bande (14) par rapport à un degré de netteté et indique si le degré de netteté est inférieur à une valeur seuil, dans lequel la caractéristique recherchée est un flou.

10. Appareil selon la revendication 3 et 9, dans lequel en présence de l'instrument métallique et du flou, la caractéristique recherchée est que l'unité d'enregistrement qui a enregistré la vidéo (18) est dans un instrument tubulaire.

11. Appareil selon l'une quelconque des revendications précédentes, dans lequel l'analyse génère une image de bande cible à partir d'une image cible en utilisant la bande de masque (30) et compare au moins une image de bande (26) du flux de données d'image de bande (14) à l'image de bande cible, dans lequel la caractéristique recherchée est une correspondance ou un degré élevé de similarité entre l'image de bande cible et la au moins une image de bande (26).

12. Appareil selon l'une quelconque des revendications précédentes, comprenant en outre un dispositif de génération d'images en bande (24) adapté pour recevoir la vidéo (18), masquer les images vidéo (16) à l'exception de la bande de masque (30) et délivrer des images de bande résultantes (26) sous la forme d'un flux de données d'images en bande (14), en particulier vers l'entrée de données (12).

13. Appareil selon la revendication 12, dans lequel le moyen de génération d'images de bande (24) est en outre adapté pour compresser les images vidéo (16) avant le masquage et/ou pour compresser les images de bande résultantes (26), en particulier en utilisant une transformée en cosinus discrète.

14. Appareil selon la revendication 13, dans lequel ladite compression est appliquée à des blocs (34) de pixels de ladite image vidéo (16), lesdits blocs ayant en particulier une taille de 8x8 pixels.

15. Procédé pour identifier automatiquement des éléments vidéo médicalement pertinents, le procédé comprenant les étapes suivantes :
- recevoir, via une entrée de données (12), d'un flux de données d'image de bande (14), le flux de données d'image de bande représentant une progression temporelle d'une vue d'image de bande d'images vidéo (16) à partir d'une vidéo (18) prise pendant une chirurgie médicale sur un patient, la vue d'image de bande étant définie par une bande de masque (30) définissant une section ayant une forme au moins essentiellement rectangulaire ou rectiligne à partir des images vidéo, dans lequel une largeur de bande de la bande de masque est au plus de 16 pixels,
- analyser, au moyen d'une analyse comprenant au moins une étape d'analyse prédéterminée, le flux de données d'image de bande pour la présence d'au moins une caractéristique recherchée,
- dépenser un résultat (E) de la présence, et
- dépenser un marqueur de départ (SM) indiquant une correspondance entre la présence et une position dans le flux de données d'image de bande lorsque le résultat indique la présence de la caractéristique recherchée.
